# EUROPÄISCHE PATENTANMELDUNG

(11) **EP 2 168 430 A1**
(43) Veröffentlichungstag der Anmeldung: **31.03.2010**
(21) Anmeldenummer: 08016957.6
(22) Anmeldetag: 26.09.2008
(51) Int. Cl.: A01K 29/00

(54) **Verfahren zur Überwachung von Schweinen**

(71) Anmelder: Hölscher & Leuschner GmbH & Co., 48488 Emsbüren (DE)
(72) Erfinder: Leuschner, Peter, 48488 Emsbüren (DE)
(74) Vertreter: Bünemann, Egon

(57) **Zusammenfassung**

Verfahren zur Überwachung von Schweinen (1) mit Hilfe einer mit einem optischen Erfassungssystem (2) versehenen Überwachungsstation (23), in der Körpermesswerte eines in der Überwachungsstation (23) stehenden einzelnen Schweins (1) erfasst und an eine Datenverarbeitung (3) weitergeleitet werden, in der die erfassten Körpermesswerte ausgewertet werden, wobei die Datenverarbeitung (3) anhand der Körpermesswerte das Schwein typisiert, dergestalt, dass es durch die Datenverarbeitung einer Gruppe (1A, 2A, 3A, 1 B, 2B, 3B, 1C, 2C, 3C) von Schweinen (1) mit zumindest einem ähnlichen oder identischen Merkmal zugeordnet wird, um diese Gruppe (1A, 2A, 3A, 1B, 2B, 3B, 1C, 2C, 3C) gruppenspezifisch behandeln zu können.

## Beschreibung

Die vorliegende Erfindung betrifft ein Verfahren zur Überwachung von Schweinen mit Hilfe einer mit einem optischen Erfassungssystem versehene Überwachungsstation, in der Körpermesswerte eines in der Überwachungsstation stehenden einzelnen Schweins erfasst und an eine Datenverarbeitung weitergeleitet werden, in der die erfassten Körpermesswerte komplett oder weiter ausgewertet werden.

In der Schweinemast und/oder -zucht werden Schweine nach Lebendgewicht oder Masttag ad libitum oder dosiert flüssig oder trocken gefüttert. Hierbei basiert das Fütterungsmanagement üblicherweise auf einer Phasenfütterung mit unterschiedlichen Futterzusammensetzungen für vorgegebene Gewichtsabschnitte der Mastschweine. Stark steigende Futterpreise üben nun zunehmend Druck auf die Betreiber einer Schweinemast- oder -zucht aus. Die Betreiben müssen zum Ende der Aufzucht- bzw. Mastperiode zur Erzielung eines optimalen Vermarktungsergebnisses die Schweine genau wiegen und einschätzen, inwieweit sich ein optimales Vermarktungsergebnis erzielen lässt oder ob eine verlängerte Mast notwendig ist.

Der mit dem Wiegen und der Beobachtung von Schweinen einhergehende Aufwand ist entsprechend hoch, während gleichzeitig das Ergebnis einer Verlängerung der Mast mit Gewichtszunahmen in unterschiedlichen Körperbereichen nicht immer vorhersagbar ist.

Es ist Aufgabe der vorliegenden Erfindung, ein Verfahren zur Verbesserung der Mast bzw. der Vermarktung bereitzustellen.

Die Aufgabe wird gelöst durch einen Gegenstand gemäß dem Oberbegriff des Anspruch 1, welcher sich durch die Merkmale des kennzeichnenden Teils des Anspruchs 1 auszeichnen. Vorteilhafte Weiterbildungen der Erfindung sind den nachfolgenden Unteransprüchen sowie der nachfolgenden Beschreibung zu entnehmen.

Es hat sich gezeigt, dass anhand der aus einer Datenverarbeitung gewonnenen bzw. der von dieser ausgewerteten Körpermesswerte eine Typisierung des Schweins vorgenommen werden kann, dergestalt, dass das Schwein einer Gruppe von Schweinen mit zumindest einem ähnlichen oder identischen Merkmal zugeordnet wird, um diese Gruppe gruppenspezifisch behandeln, d.h. insbesondere separieren und beispielweise gruppenspezifisch füttern zu können.

Bei einer solchen Typisierung können tierspezifische Eigenarten, wie z.B. Geschlecht, Wachstum- und Verhaltenseigenschaften, Magerfleischanteil, Fettanteil oder auch die Masse des Schweins berücksichtigt werden, um eine gezielte Vorhersage für den Erfolg einer Weitermast oder einer Vermarktung tätigen zu können. Es handelt sich somit zunächst um eine Gruppierung der Schweine in ähnliche Typen. Innerhalb dieses Typs bzw. dieser Typgruppen oder auch Cluster kann dann gegebenenfalls über eine Vermarktung entschieden werden, bzw. die Vermarktungsentscheidung, wie sie beispielsweise in der EP 1396188B1 beschrieben wird, kann gezielter vorgenommen werden. Darüber hinaus muss ein Schweinebestand nur noch seltener vom Bedienpersonal persönlich überprüft werden, da die Unterteilung in Gruppen in Zusammenhang mit der gezielten Ansteuerung von Futter oder Vermarktungsbereichen automatisiert erfolgen kann. Hierfür wird durch das optische Erfassungssystem der Überwachungsstation bei einer Aufnahme der Körpermesswerte eine Einordnung der Körpermesswerte in eine entsprechende Gruppe vorgenommen und anschließend eine Entscheidung hinsichtlich einer Fütterung durch nachfolgendes An- und Aufsteuern eines von mehreren möglichen Ausgängen einer Überwachungsstation vorgenommen, um das Schwein in eine spezielle Futterstation zu lotsen.

Die Anzahl der abhängig oder unabhängig voneinander definierbaren Merkmale zur Defnition eines Typs ist offen und beispielsweise abhängig von den Möglichkeiten, unterschiedliche Gruppen unterschiedlich behandeln zu können. Beispielsweise können als bevorzugte Merkmale Gesundheitsmerkmale wie Körpertemperatur oder phänomenologische Parameter wie Hautverfärbungen verwendet werden.

Eine einfachste Typisierung ist die Typisierung nach Geschlecht. Mit Hilfe einer vorzugsweise auf Bildanalyse aufbauenden optischen Erkennung lässt sich bei jedem Durchgang durch die Überwachungsstation über ein mathematisches Analyseverfahren vorzugsweise der Geschlechtstyp jedes Tieres aus seiner Form bestimmen. Die Unterteilung in männliche und weibliche Schweine, bei denen erstere kürzer, breiter, mit einem schwächeren Schinken, einem breiteren Bauch, einem breiteren Schulteransatz und einer erheblich breiteren Schulter versehen sind als weibliche Schweine, die länger, schmaler, mit stärkerem Rücken, erheblich schmalerem Bauch, schmalerem Schulteransatz und einer schmaleren Schulter versehen sind, ist beispielsweise besonders einfach über bildgestützte Erkennung der genannten Unterschiede durchführbar.

Futteraufnahme und tägliche Zunahmen von Gewicht sind bei Börgen höher und der Fettansatz stärker als bei weiblichen Tieren. Dadurch ergibt sich eine längere Mastzeit der weiblichen Tiere im Vergleich zu den Börgen. Eine auf das jeweilige Geschlecht bezogene, angepasste Fütterung, insbesondere hinsichtlich der Futterzusammensetzung und der Futtermenge sowie ggf. der Qualität des Futters ergibt bereits eine Verbesserung der biologischen Leistung während der Mast. Darüber hinaus tritt eine Verbesserung der Fleischqualität und damit einhergehend ein höherer Schlachterlös ein. Die Geschlechtstrennung bei der Fütterung führt somit zu einer höheren Fleischqualität und/oder zu Reduktionen bei den Futtermittelkosten.

Durch das erfindungsgemäße Verfahren in einer Ausbildung und Form einer automatisierten Sortierstation ist es dabei erstmalig möglich, weibliche und männliche Tiere in einer großen Gruppe zu halten und trotzdem automatisiert getrennt zu füttern. Bislang war dies nur bei strenger räumlicher Trennung der Geschlechter möglich. Dies bietet Vorteile für den Landwirt während der Mast (keine Geschlechtertrennung, optimierte Raumnutzung) als auch für die Tiere hinsichtlich einer "natürlichen" Gruppenkonstellation.

In einer weiteren vorteilhaften Ausbildung der Erfindung ist die Typisierung jedoch nicht direkt durch das biologische Geschlecht gegeben, sondern verfeinert durch die Typisierung anhand einer Untergliederung nach dem sogenannten "physiologischen" "Geschlecht. Dieses berücksichtigt, dass das biologische Geschlecht "männlich" oder "weiblich" nicht ein eindeutiges Kriterium als Grundlage für eine optimale Fütterung liefert. Auch eine solche Typisierung unter einer etwaigen zusätzlichen Definition eines "neutralen" Typen lässt sich anhand der Bilderkennung bzw. der optischen Überwachung und der Auswertung der entsprechenden Messergebnisse gegebenenfalls unter zusätzlicher Information des biologischen Geschlechts für eine Typisierung verwenden.

In einer weiteren vorteilhaften Ausbildung der Erfindung erfolgt die Typisierung anhand von Wachstumsparametern. Hierbei können Gruppen von frohwüchsigen, normalwüchsigen und schwachwüchsigen Schweinen vorzugsweise über eine zeitlich diskrete, d.h. wiederkehrende Messung einzelnen insbesondere individualisierter Schweine erkannt werden. Besonders in Kombination mit einer auf eine optimierte Vermarktung ausgerichtete Clusterung von Schweinen, beispielsweise in Qualitätsschweine mit ausgeprägtem Schinken, Durchschnittsschweinen und eher bauchigen Schweinen, lässt sich eine Typenmatrix erstellen, anhand derer eine optimale Fütterung während einer Mast erzielt werden kann.

Als für die Clusterung zugrunde liegende Körpermesswerte sind insbesondere Informationen über die Kontur des in der Überwachungsstation befindlichen Schweins vorteilhaft. Gegebenenfalls unter Ergänzung dieser Konturinformation durch Höhen und andere eine dritte Dimension erfassende Messwerte wie beispielsweise eine Konturmessung von vorne oder hinten oder eine Oberflächenabtastung werden eine Vielzahl von Information gesammelt, die sonst nur durch Betrachtung des Mästers vorgenommen werden können. Für die Clusterung bzw. die Typisierung des Schweins werden die gefundenen Körpermesswerte in Gruppen eingeteilt. Hierfür werden eine Reihe charakteristischer Punkte definiert. Diese charakteristischen Werte können dann Gruppen von Werten zugeordnet werden und somit bereits zur Typisierung verwendet werden. Aus einer Konturkurve des Schweins oder auch aus einer anderen charakteristischen Kurve können allerdings auch vorab eine finite Anzahl dieser charakteristischen Punkte aus der Bildanalyse extrahiert und approximiert werden. Die Typisierung erfolgt dann beispielsweise anhand der approximierten Konturkurve. Vorteilhafterweise erfolgt eine Normierung der von der Konturkurve abgebildeten Fläche insbesondere unter Verwendung einer Höheninformation, um beispielsweise die für die Entscheidung Schinken-, Bauch- oder Normalschwein notwendige Typisierung unabhängig von der Größe des Schweins vornehmen zu können.

In einer vorteilhaften Weiterbildung der Erfindung wird die Datenverarbeitung mit einer vorgegebenen Anzahl von Typen versehen, in die die Körpermesswerte bzw. daraus entwickelte charakteristische Größen mittels strukturprüfender Analyse, beispielsweise Regression oder dergleichen eingepasst werden. Bei dieser Art der Typisierung handelt es sich um eine vergleichsweise schnell vornehmbare Typisierung, die allerdings einerseits Vorarbeit erfordert, andererseits voraussetzt, dass das zu überwachende Schwein in die vorgegebenen Klasse bzw. Typen hineinfällt.

In einer weiteren vorteilhaften Ausbildung der Erfindung ist die Datenverarbeitung in der Lage, aus einer Vielzahl von überwachten Schweinen eigenständig Typen zu bilden, wobei die aufgenommenen Körpermesswerte im Wege einer strukturbildenden Analyse beispielsweise unter Zuhilfenahme von Clusteranalyse oder der Verwendung neuronaler Netze eigene Typen bzw. Cluster entwickelt. Diese Cluster können von der Datenverarbeitung durch Präferierung bestimmter definierter Punkte teilweise vorgegeben werden, sie können sich jedoch auch aus den aufgenommenen Messwerten eigenständig ergeben.

Zur verbesserten Typisierung können in einem Schweinebestand gefundene Grunddaten oder Cluster- bzw. Typisierungsinformationen von der Datenverarbeitung an einen zentralen Server übermittelt werden, der die von den einzelnen Mästern gefundenen Cluster miteinander abgleicht und so einen Pool von Clustern bildet, der gleichzeitig wiederum Ausgangslage für weitere neu aufzubauende Datenverarbeitungen ist. Ein solcher Art verändertes oder neu gefundenes Cluster kann darüber hinaus auch den bereits vorhandenen Datenverarbeitungen im Wege eines Updates zur Verfügung gestellt werden. Die Datenverarbeitung kann somit über herkömmliche Kommunikationsmittel wie Telefon, Internetverbindungen oder dergleichen mit einem vorzugsweise zentralen Server oder anderen, dezentralen aufgebauten Netzen verbunden werden.

Um die vorgenommene Typisierung des Schweins bei einer erneuten Messung desselben Schweins oder derselben Gruppe nicht noch einmal komplett vornehmen zu müssen und die Zeit zum Erfassen des Typs bzw. zur Ausbildung eines Clusters nicht erneut aufwenden zu müssen, können die Typisierungsinformationen vorzugsweise auf einem an oder in dem Schwein angeordneten Informationsträger übertragen und dort gespeichert werden. Hierfür bieten sich herkömmliche RFID oder andere Chips an.

Insofern kann es ebenfalls vorteilhaft sein, wenn die Datenverarbeitung in der Überwachungsstation zur Typisierung auf einen an oder in dem Schwein angeordneten Informationsträger zugreift und dieses zu bestimmten Zeitpunkten gegebenenfalls ohne zusätzliche Auswertung der Körpermessinformation vornimmt.

Weitere Vorteile und Einzelheiten der Erfindung lassen sich daher der nachfolgenden Beschreibung der Figuren entnehmen. In den schematischen Darstellungen zeiget:
- Fig. 1: eine Seitenansicht eines Schweins unterhalb eines optischen Erfassungssystems,
- Fig. 2: ein Messbild zu dem Schwein nach Fig. 1 für eine elektronische Auswertung,
- Fig. 3: einen Schweinestall für eine Großgruppenhaltung in Teildraufsicht,
- Fig. 4: der Vergleich einer Konturkurve zweier Schweinetypen,
- Fig. 5: Konturkurven für eine weitere Typisierung,
- Fig. 6: eine weitere Typenmatrix unter Verwendung der Typisierung gemäß Fig. 5.

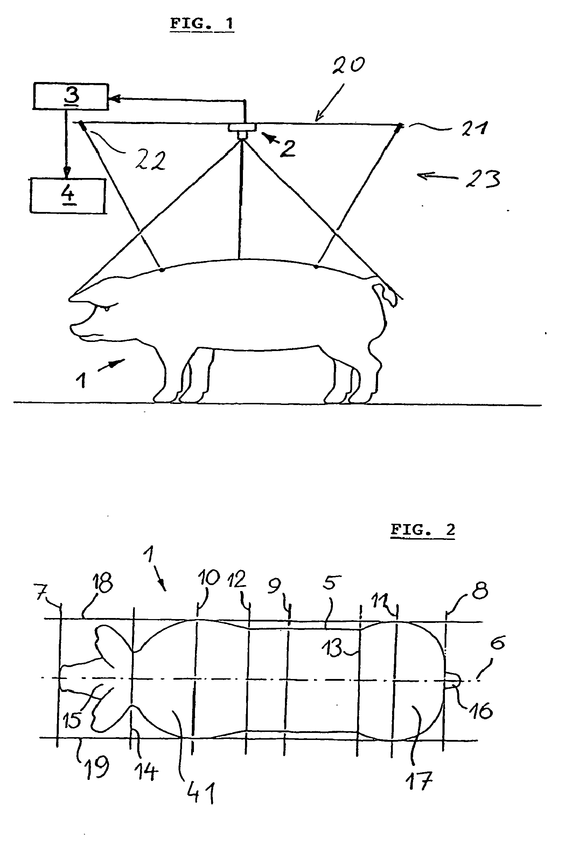

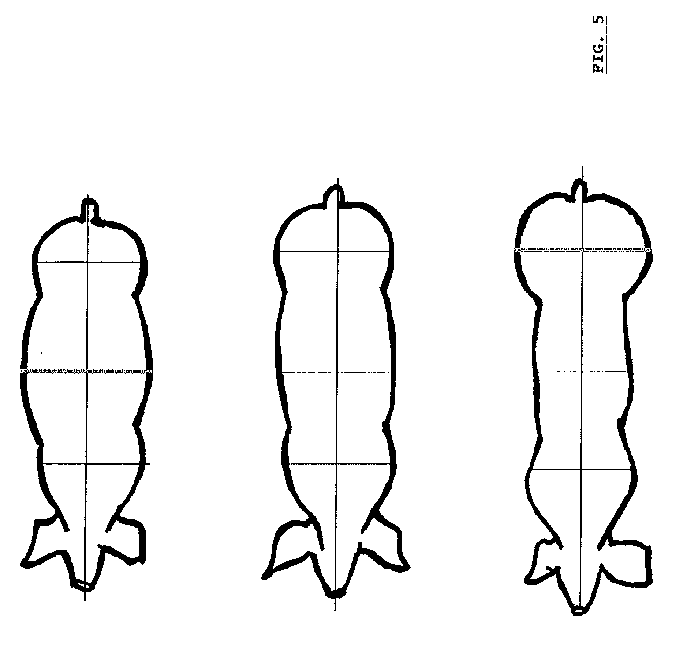

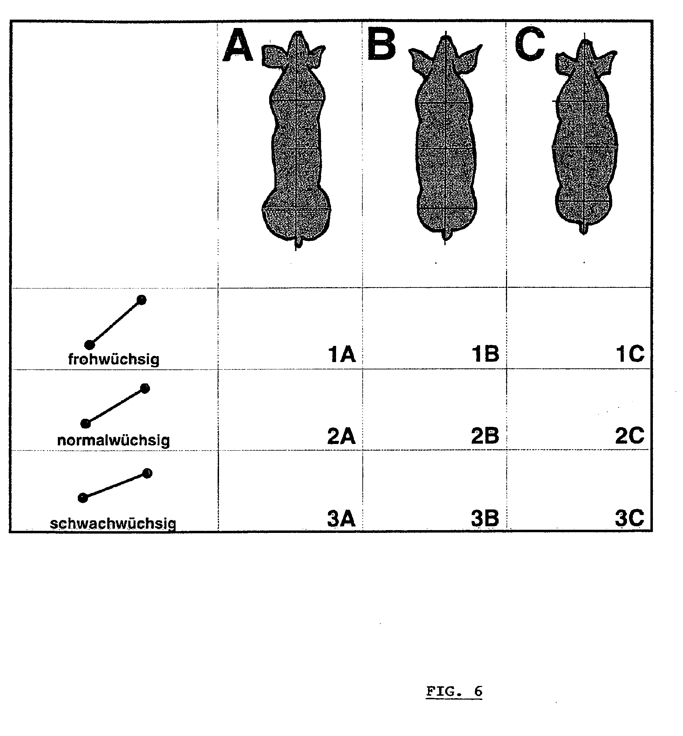

In Fig. 1 ist ein Schwein 1 dargestellt, welches mit Hilfe eines optischen Erfassungssystems 2, beispielsweise einer Digitalkamera, hinsichtlich seiner Körpermesswerte überwacht und erfasst wird. Die Körpermesswerte werden an eine Datenverarbeitung 3 weitergeleitet, in der die Körpermesswerte ausgewertet werden. Anhand der Werte wird das Schwein typisiert, d.h. in eines der beispielsweise in Fig. 6 dargestellten Cluster gruppiert, um einerseits das Schwein selbst, andererseits die Mitglieder des Clusters/Typs gruppenspezifisch behandeln zu können. Die Kombination zwischen dem insbesondere aus zeitlich versetzten Messungen ermittelten Wachstumstyp sowie dem Qualitätstyp Schinkenschwein (A), Normalschwein (B) und Bauchschwein (C) (vgl. Fig. 5) mit der Wüchsigkeit ergibt eine differenzierte Abstimmungsmöglichkeit für eine angepasste Fütterung. Die ideale Futteranpassung wird somit nicht mehr nach Gewichtsgruppen oder gewichtet nach entsprechend einer Vermarktung unterschiedlich bewerteter Fleischteile durchgeführt, sondern nach den Gruppen der unterschiedlichen Merkmalskombinationen vorgenommen.

Die Entscheidung über eine Weitermast oder eine Vermarktung und mithin der Zeitpunkt der Abgabe des Schweins ist damit in erster Linie abhängig von dem gefunden Typ und erst an vorzugsweise nachgeordneter Stelle von bei einer Vermarktung erzielbaren Verkaufserlöse der einzelnen Fleischbereiche. Die bereits aus dem Stand der Technik bekannte Entscheidung über eine Vermarktung des Schweins aufgrund von einer Gewichtung der Körpermesswerte in Abhängigkeit vom Verkaufserlös unterschiedlicher Fleischbereiche erfolgt somit zumindest in Kombination mit einer vorangegangenen Typisierung bzw. innerhalb der einzelnen Gruppen.

Die Auswertung in der Datenverarbeitung 3 führt zu der Ausgabe eines Steuersignals an eine Ausgabeeinrichtung 4. Hierbei handelt es sich im einfachsten Fall um eine Anzeigevorrichtung. Vorteilhafterweise ist das Steuersignal jedoch zur Steuerung einer Stelleinheit verbunden, die in Abhängigkeit der Auswertung einen von mehreren möglichen Ausgängen aus der vorzugsweise als Schleuse ausgebildeten Überwachungsstation freigibt. In den durch die unterschiedlichen Ausgänge erreichbaren Bereichen eines Schweinemaststalls kann dann eine typangepasste, d.h. beispielsweise geschlechtsangepasste Fütterung erfolgen oder die Schweine können in einer Bucht für eine Vermarktung gesammelt werden.

Die messtechnische Bewertung kann somit einerseits zwar durch eine bewegliche Überwachungsstation erfolgen, in der die Kamera 2, die Auswertung 3 und die Ausgabeeinrichtung 4 mit einem Fahrgestell über das zu überwachende Schwein gebracht werden, andererseits handelt es sich jedoch vorteilhafterweise um die als Schleuse ausgebildete Überwachungsstation mit unterschiedlichen Ausgängen. In Fig. 1 ist in Höhe der Kamera 2 hierfür eine Basis 20 für ein Messsystem angedeutet, die für eine bekannterweise vielfältig ausführbare mechanische Haltestruktur steht und auch die Gerätetechnik für Auswertung 3 und Ausgabeeinrichtung 4 halten kann.

Abstandsmesssysteme 21 und 22, die alternativ oder ergänzend auch als weitere optische Erfassung ausgebaut sein können, sind fest gegenüber der Kamera installiert um somit auch eine Information über die Höhe des betrachteten Schweins zu erhalten bzw. eine dreidimensionale Information über die Form des Schweins bzw. dessen Oberflächenaussehen zu erhalten. Die Höhenmesssysteme 21,22 überwachen hierbei die vertikalen Abstände, so dass anhand der gewonnenen Informationen eine Normierung des mittels des optischen Überwachungssystems 22 gemessenen Bildes erfolgen kann.

In Fig. 2 ist der Konturverlauf eines aufgenommenen Bildes der optischen Überwachungseinrichtung 2 in Umrissen dargestellt, wobei die Konturlinie 5 des Schweins 1 durch die Datenauswertung bereits mit einem aufwendigen mathematischen Analyseverfahren entwickelt wurde. Um den gezeigten Konturverlauf zu erhalten, kann die Datenverarbeitung auch lediglich charakteristische Punkte aufnehmen, die sich aus den aufgenommenen Pixelinformationen beispielsweise als Konturlinie zwischen hellen und dunklen Bildbereichen ergeben. Als charakteristische Punkte dienen in Fig. 2 beispielsweise Schnittpunkte der Konturlinie 5 mit den Linien 7 bis 14. Eine Mittellinie 6, eine vordere und eine hintere Begrenzungslinie 7,8, und eine mittlere Querlinie 9 und dazwischen in jeweils mittleren Schenkelbereichen vorhandene Querlinien 10,11 für eine größte Breite sowie die dazwischen befindlichen Querlinien 12 bis 14 für die Schenkelansätze sowie einen Halsansatz stellen Beispiele für charakteristische Linien dar, die im Schnittbereich mit der Kontur Messwerte ergeben, mit denen erfolgreich eine Typisierung vorgenommen werden kann.

Gleichzeitig ist es denkbar, dass aufgrund der approximierten Konturkurve nicht diese gezeigten sondern andere charakteristische Punkte in einer Clusteranalyse für eine Typisierung des Schweins gefunden werden können. Statt oder ergänzend zu der Außenkontur könnten mit Hilfe der Beleuchtung oder der sich daraus ergebenden plastischen fotografischen Wiedergabe auch Zwischenpunkte oder Zwischenlinien gefunden werden, die charakteristische Werte für Körperrundungen oder auch Höhenlinien zur Erfassung bestimmter Körperpartien ergeben. Ein Kopf 15 oder ein Schwanz 16 des Schweins können hierbei gegebenenfalls mit berücksichtigt werden, allerdings ist dies nicht zwangsläufig notwendig. Längslinien 18 und 19 dienen des Weiteren der Erfassung der Breite des Tieres, wobei ein Schinkenbereich 17 beispielsweise eine andere Breite als ein Schulterbereich 41 aufweisen kann.

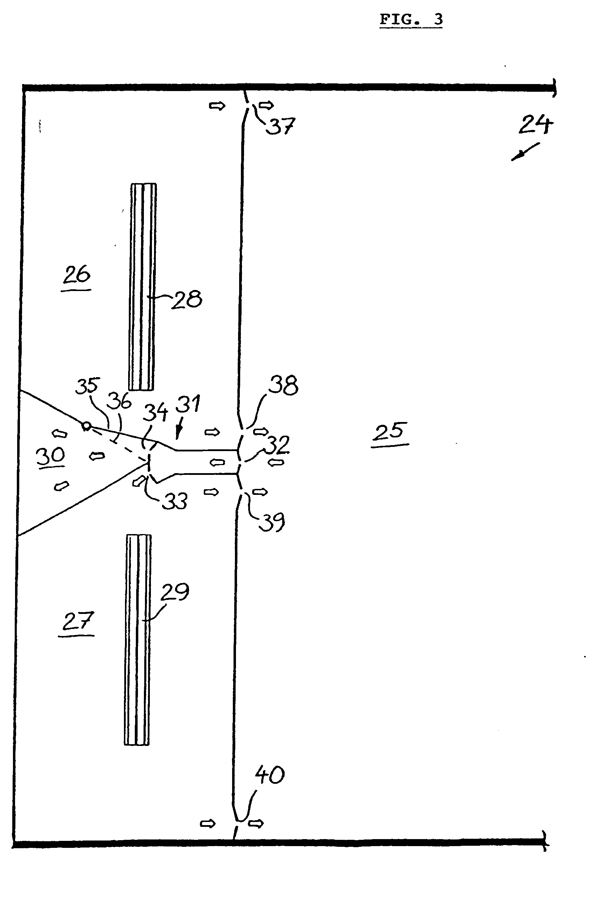

Die in Fig. 1 gezeigte Überwachungsstation 23 ist vorteilhafterweise in eine Schleuse integriert, wie sie der Figur 3 zu entnehmen ist. In dieser Figur ist schematisch und in Draufsicht ein Schweinestall(bereich) 24 für eine Großgruppenhaltung von Schweinen 1 dargestellt, die einen gemeinschaftlichen Aufenthalts- und Liegebereich 25 nutzen können, aus dem sie jeweils in einen von zwei (oder bei anderen Ausführungsbeispielen mehr als zwei) Fütterungsbereichen 26, 27 gelangen. Die Fütterungsbereiche 26,27 sind mit Fütterungseinrichtungen 28 bzw. 29 versehen, die insbesondere Teil einer automatischen Fütterungsanlage sein können. Darüber hinaus können die Schweine über die dargestellte Schleuse 31 in einen Selektionsbereich 30 hineingelangen, der für Vermarktungszwecke bestimmt ist. Pfeile 42 charakterisieren die unterschiedlich möglichen Laufwege der Schweine 1.

Der Zugang zu den unterschiedlichen Bereichen über die Schleuse 31 erfolgt nur in einer fest vorgegebenen Richtung vom Liegebereich 25 durch eine Pforte 32 und mithin unter zwangsweise Erfassung des Schweins in der Überwachungsstation 23.

Wege 33 und 34 bilden die einzigen Ausgänge aus der Überwachungsstation, die nicht durch die Pforte 32 verlassen werden kann. Im vorliegenden Falle hat der Selektionsbereich 30, eingegrenzt durch Trenngatter, in einem an die Schleuse 31 anstoßenden Gatterbereich ein Schwenkgatter 35, welches in die in gebrochener Linie dargestellte Gatterposition 36 verschwenkbar ist. Von den Fütterungsbereichen 26 und 27 können die Tiere durch einen Weg 37, 38, 39 oder 40 zurück in den Liegebereich 25 gelangen.

Erfahrungsgemäß nimmt jedes Tier mehrmals täglich Nahrung zu sich. Der Weg zu der Fütterung bzw. den Fütterungsstationen 28 und 29 gelingt wiederum nur durch die Schleuse 31 hindurch, was eine mehrfache, zeitlich beabstandete Erfassung eines Tieres ermöglicht. Insbesondere über diese zeitliche Erfassung erfolgt eine Auswertung der Wüchsigkeit des Schweins 1 und ermöglicht eine Typisierung anhand der Typparameter "frohwüchsig", "normalwüchsig", "schwachwüchsig".

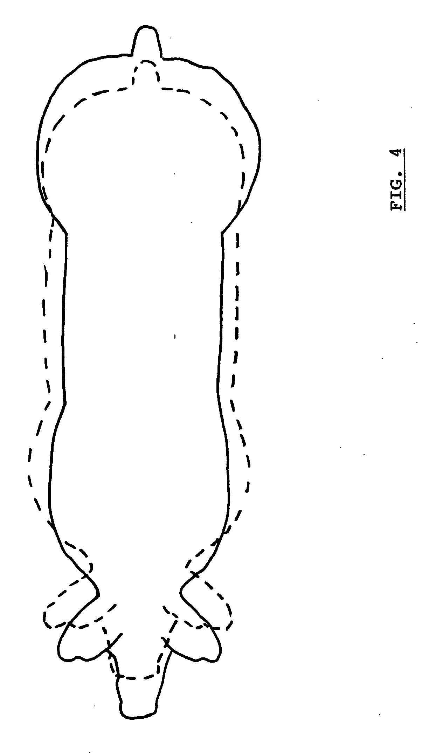

Die von einer Überwachungsstation aufgefundenen Kontur- bzw. Körpermessdaten können beispielsweise zu der in Fig. 4 gezeigten Typisierung in männliche (gestrichelt) dargestellte und weibliche (durchgezogen) Schweinetypen führen. Hierbei können darüber hinaus Zwischentypen definiert werden, da das biologische Geschlecht männlich oder weiblich nicht ein eindeutiges Kriterium als Grundlage für eine optimale Fütterung und Vermarktung liefert. Ein Teil der weiblichen Tiere verhält sich wie männliche und umgekehrt. Ebenso gibt es neutrale Tiere, die kein eindeutiges Geschlechtsverhalten auf den Fütterungs- und Mastablauf zeigen, so dass sich insbesondere eine Untergliederung nach dem sogenannten physiologischen Geschlecht, d.h. "physiologisch männlich" und "physiologisch weiblich" sowie "neutral" anbietet. Diese Typisierung ist insbesondere unter Verwendung von Zusatzinformationen, inwieweit es sich um ein (biologisch) männliches oder weibliches Tier handelt mit Hilfe von zusätzlichen optischen Erkennungseinrichtungen möglich.

Neben den in Fig. 4 gezeigten Typen sind darüber hinaus ein Wuchs- oder fleischbetontes Schwein mit Hilfe der mathematischen Auswertung identifizierbar. Die Zunahmekriterien hoch- mittel- niedrigwüchsig unter insbesonderer Verwendung von approximierten oder anderweitig festgestellten Gewichtsinformationen sind hierbei für die Unterteilung in Typen mit ausschlaggebend. Eine Kombination zwischen Geschlechtstyp und Wachstumstyp ergibt eine differenzierte Abstimmungsmöglichkeit für eine angepasste Fütterung. Die ideale Futteranpassung nach der Futtermenge, der Futterzusammensetzung und der Futterzuteilung im Tagesverlauf wird somit nicht mehr nach Gewichtsgruppen geführt, sondern unterscheidet sich auch in Gruppen der unterschiedlichen Typen- und Geschlechtskombinationen.

Darüber hinaus sind die in Fig. 5 gezeigten Schweine weiterhin bevorzugte Beispiele für hinsichtlich von Vermarktungskriterien wie Schinkenschwein (untere Abbildung der Fig. 5), Durchschnittsschwein (mittlere Abbildung der Fig. 5) und Bauchschwein (obere Abbildung der Fig. 5) ermittelbare Typen. Aus diesen drei Typen, die sich aufgrund der Körperkontur entdecken und einordnen lassen, kann im Zusammenhang mit der Wüchsigkeit die in Fig. 6 gezeigte Typenmatrix mit Gruppen bzw. Typen 1A, 2A, 3A, 1B, 2B, 3B, 1C, 2C, 3C erstellt werden, aus der dann mit Hilfe der Typenanalyse für jedes Schwein eine Optimierung eines Vermarktungszeitpunktes automatisch erstellt werden kann. Gerade anhand des Kriteriums der Wüchsigkeit ist auch die zukünftige Entwicklung, d.h. bei welchem Schweinetyp eine eventuelle Verfettung bei einer Weitermast und damit eine Reduzierung des Schlachterlöses eintritt oder inwieweit sich der Erlös weiter steigern lässt, automatisiert abschätzbar.

Durch die Erkennung des Typs des Schweins mit Hilfe der optischen Bildanalyse bzw. der Einordnung und Definition bestimmter Typen ergibt sich aus der vorteilhaften gemischt geschlechtlichen Haltung im Liegebereich eine getrennt geschlechtliche Fütterung und eine typangepasste, d.h. optimale Vermarktung der einzelnen Schweine.

## Patentansprüche

1. Verfahren zur Überwachung von Schweinen (1) mit Hilfe einer mit einem optischen Erfassungssystem (2) versehenen Überwachungsstation (23), in der Körpermesswerte eines in der Überwachungsstation (23) stehenden einzelnen Schweins (1) erfasst und an eine Datenverarbeitung (3) weitergeleitet werden, in der die erfassten Körpermesswerte ausgewertet werden, **dadurch gekennzeichnet, dass** die Datenverarbeitung (3) anhand der Körpermesswerte das Schwein typisiert, dergestalt, dass es durch die Datenverarbeitung einer Gruppe (1A, 2A, 3A, 1B, 2B, 3B, 1C, 2C, 3C) von Schweinen (1) mit zumindest einem ähnlichen oder identischen Merkmal zugeordnet wird, um diese Gruppe (1A, 2A, 3A, 1B, 2B, 3B, 1C, 2C, 3C) gruppenspezifisch behandeln zu können.

2. Verfahren nach Anspruch 1, **dadurch gekennzeichnet, dass** aufgrund der Typisierung eine Entscheidung über die Weiterbehandlung des Schweins (1) insbesondere hinsichtlich einer angepassten Fütterung und/oder einer Vermarktung automatisch getroffen wird.

3. Verfahren nach Anspruch 2, **dadurch gekennzeichnet, dass** aufgrund der Entscheidung von der Datenverarbeitung (3) ein wahlweise unter mehreren Ausgängen (33,34) aufzusteuernder Ausgang der als Schleuse (31) ausgebildeten Überwachungsstation (23) geöffnet wird.

4. Verfahren nach einem der vorherigen Ansprüche, **dadurch gekennzeichnet, dass** die Körpermesswerte eine Kontur des Schweins (1) beschreiben.

5. Verfahren nach einem der vorherigen Ansprüche, **dadurch gekennzeichnet, dass** die Körpermesswerte zur Approximation einer durch eine finite Anzahl definierter Punkte näherungsweise bestimmbaren Konturkurve (5), insbesondere unter zumindest teilweiser Aussparung des Kopfes (15) verwendet werden.

6. Verfahren nach einem der vorherigen Ansprüche, **dadurch gekennzeichnet, die** von der Konturkurve (5) abgebildete Fläche insbesondere unter Verwendung einer Höheninformation normiert wird.

7. Verfahren nach einem der vorherigen Ansprüche, **dadurch gekennzeichnet, dass** Körpermesswerte im Wege einer multivariaten, vorzugsweise einer strukturbildenden oder einer strukturprüfenden Analyse, zur Typisierung des Schweins (1) verwendet werden.

8. Verfahren nach einem der vorherigen Ansprüche, **dadurch gekennzeichnet, dass** von den Schweinen (1) gewonnenen Typisierungsinformationen von der Datenverarbeitung (3) an einen zentralen Server übermittelt werden.

9. Verfahren nach einem der vorherigen Ansprüche, **dadurch gekennzeichnet, dass** die Datenverarbeitung (3) zur Änderung von der Typisierung zugrunde liegenden Programmstrukturen insbesondere im Wege eines manuellen, automatisiert oder quasi-kontinuierlich im Sinne einer Optimierung ständig laufenden Prozesses updatefähig ist.

10. Verfahren nach einem der vorherigen Ansprüche, **dadurch gekennzeichnet, dass** die Datenverarbeitung mit einem zentralen Server verbunden ist und von diesem überwachungsstationsspezifische Optimierungen zu erhalten.

11. Verfahren nach einem der vorherigen Ansprüche, **dadurch gekennzeichnet, dass** zur Typisierung der Schweine (1) zumindest ein vorzugsweise physiologisch geschlechtsspezifischer Parameter verwendet wird.

12. Verfahren nach einem der vorherigen Ansprüche, **dadurch gekennzeichnet, dass** zur Typisierung zumindest ein Wachstumsparameter und/oder zumindest ein Verhaltensparameter und/oder ein physiologischer und/oder ein phänomelogischer und/oder ein Gesundheitsparameter verwendet wird.

13. Verfahren nach einem der vorherigen Ansprüche, **dadurch gekennzeichnet, dass** zur Typisierung zumindest ein Vermarktungsparameter verwendet wird.

14. Verfahren nach einem der vorherigen Ansprüche, **dadurch gekennzeichnet, dass** die Typisierung durch eine aufgrund eines Verlassens der Überwachungsstation zeitlich beabstandete Erfassung eines Schweins erfolgt.

15. Verfahren nach einem der vorherigen Ansprüche, **dadurch gekennzeichnet, dass** die Typisierungsinformation auf einen an oder in dem Schwein (1) angeordneten Informationsträger übertragen wird.

16. Verfahren nach einem der vorherigen Ansprüche, **dadurch gekennzeichnet, dass** die Datenverarbeitung (3) in der Überwachungsstation zur Typisierung auf einen an oder in dem Schwein (1) angeordneten Informationsträger zugreift.

17. Verfahren nach einem der vorherigen Ansprüche, **dadurch gekennzeichnet, dass** das optische Erfassungssystem (2) das in der Überwachungsstation (23) befindliche Schwein (1) mehrmals hintereinander erfasst und die entsprechenden Körpermesswerte vorselektiert und teilweise vernachlässigt werden.

18. Verfahren nach einem der vorherigen Ansprüche, **dadurch gekennzeichnet, dass** die Datenverarbeitung (3) aus einer Mehrzahl optischer Überwachungsgeräte (2) jeweils Körpermesswerte erhält und aus diesen jeweils oder in Kombination eine Typisierung (1A, 2A, 3A, 1B, 2B, 3B, 1C, 2C, 3C) vornimmt.
